# EUROPÄISCHE PATENTSCHRIFT

(11) **EP 2 665 777 B1**
(45) Veröffentlichungstag und Bekanntmachung des Hinweises auf die Patenterteilung: **19.11.2014**
(21) Anmeldenummer: 12700198.0
(22) Anmeldetag: 16.01.2012
(51) Int. Cl.: C08L 77/00

(54) **HYDROLYSESTABILE POLYAMIDE**
HYDROLYSIS-STABLE POLYAMIDES
POLYAMIDES STABLES À L'HYDROLYSE

(30) Priorität: 18.01.2011 EP 11151297
(43) Veröffentlichungstag der Anmeldung: 27.11.2013
(73) Patentinhaber: BASF SE, 67056 Ludwigshafen (DE)
(72) Erfinder: PRUSTY, Manoranjan, 68167 Mannheim (DE); LANGE, Arno, 67098 Bad Dürkheim (DE); GABRIEL, Claus, 64347 Griesheim (DE); SCHEIBITZ, Matthias, 69469 Weinheim (DE)
(86) Internationale Anmeldenummer: PCT/EP2012/050536
(87) Internationale Veröffentlichungsnummer: WO 2012/098063

(56) Entgegenhaltungen:
- JP-A- 6 107 871
- JP-A- 61 211 363

## Beschreibung

Die Erfindung betrifft thermoplastische Formmassen, enthaltend
A) 10 bis 99,9 Gew.-% eines thermoplastischen Polyamides
B) 0,1 bis 20 Gew.-% eines Terpolymerisates, erhältlich durch Copolymerisation von
   (B1) 5-60 Gew.-% mindestens eines elektronendefizienten Olefins,
   (B2) 5 bis B5 Gew.-% mindestens eines Isobutenhomo- oder -copolymerisates mit einem zahlenmittleren Molekulargewicht Mₙ von 100 bis 500.000 und
   (B3) 5-60 Gew.-% mindestens eines Alkoxyvinylsilans, wobei die Summe der Gew.-% der Komponenten (B1), (B2) und (B3) jeweils 100 Gew.-% ergibt,
C) 0 bis 50 Gew.-% eines faser- oder teilchenförmigen Füllstoffes oder deren Mischungen,
D) 0 bis 50 Gew.-% weiterer Zusatzstoffe,
wobei die Summe der Gewichtsprozente der Komponenten A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Es ist bekannt, dass thermoplastisch verarbeitbare Polyamide die Fähigkeit besitzen, Wasser aufzunehmen. Hierbei können jedoch Festigkeit und Steifigkeit der Produkte bis zu 50 % herabgesetzt werden.

Beispiele für Hydrolysestabilisatoren sind u.a. Phenolverbindungen, wie diese aus EP-A 112 542, EP-A 224 847, EP-A 240 887 und DE-A 41 20 661 hervorgehen.

Nachteilig sind bei diesen niedermolekularen Stoffen die Flüchtigkeit (toxologisch unerwünscht) und die Bildung von Formbelag bei der Verarbeitung sowie eine geringere Wärmeformbeständigkeit.

In der jüngeren EP (Aktenzeichen 101 755 19.7) werden Verfahren zur Herstellung von Terpolymerisaten B) vorgeschlagen nebst Anwendungen, die unterschiedlich zu der erfindungsgemäßen sind.

Der vorliegenden Erfindung lag daher die Aufgabe zugrunde, thermoplastische Polyamidformmassen zur Verfügung zu stellen, welche eine verbesserte WAB und eine gute Oberfläche nach Hydrolyselagerung sowie Mechanik aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,9, vorzugsweise 20 bis 98 und insbesondere 25 bis 94 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoff-atomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

| AB-Polymere: | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |
| AA/BB-Polymere | |
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | 1,9-Nonandiamin, Terephthalsäure |
| PA MXD6 | m-Xylylendiamin, Adipinsäure |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 0,1 bis 20, bevorzugt 0,1 bis 10 und insbesondere 0,2 bis 5 Gew.-% eines Terpolymerisates B) gemäß Anspruch 1.

Als Komponente (B1) werden üblicherweise solche Olefine als Monomere eingesetzt, welche in α-Stellung zur olefinischen Doppelbindung einen oder mehrere elektronenziehende Substituenten tragen, die (zum Beispiel Ober die Konjugation der π-Elektronensysteme) die Elektronendichte der olefinischen Doppelbindung herabsetzen. In einer bevorzugten Ausführungsform trägt das mindestens eine elektronendefiziente Olefin der Komponente (B) an seiner olefinischen Doppelbindung mindestens einen, insbesondere einen oder zwei, elektronenziehenden Substituenten ausgewählt aus der Gruppe -CO- (Carbonyl), -CN (Cyano), -NO₂ (Nitro) und -SO₂- (Sulfo). Die Gruppe -CO- ist dabei in der Regel Bestandteil einer Ketofunktion, einer Aldehydfunktion oder vor allem einer Carboxylfunktion in Form beispielsweise einer freien Carbonsäure, eines Carbonsäure-esters, eines Carbonsäureamids, eines Carbonsäureimids oder eines cyclischen oder nicht-cyclischen Carbonsäureanhydrids. Die Gruppe -SO₂- ist dabei in der Regel Bestandteil einer Sulfonfunktion, einer Sulfonsäure, eines Sulfonsäureesters, eines Sulfonsäureamids oder eines Sulfonsäureimids.

Typische Beispiele für derartige elektronendefiziente Olefine der Komponente (B1) sind Acrylsäure, deren Ester wie Methylacrylat, Ethylacrylat oder n-Butylacrylat, deren Amide und deren Imide, Acrylnitril, Methacrylsäure, deren Ester wie Methylmethacrylat, Ethylmethacrylat oder n-Butylmethacrylat, deren Amide und deren Imide, Methacrylnitril, Maleinsäure, deren Mono- und Diester wie Monomethylmaleat, Dimethylmaleat, Monoethylmaleat oder Diethylmaleat, deren Mono- und Diamide, deren Imide, deren Mono- und Dinitril sowie Fumarsäure, deren Mono- und Diester wie Monomethylfumarat, Dimethylfumarat, Monoethylfumarat oder Diethylfumarat, deren Mono- und Diamide und deren Mono- und Dinitril. Als Esteralkoholreste und als mögliche Substituenten an den genannten Amiden und Imiden kommen hauptsächlich C₁- bis C₂₀-Alkylreste in Betracht. Es können auch Mischungen der genannten elektronendefizienten Olefine als Komponente (B1) eingesetzt werden.

Ganz besonders bevorzugt wird ein Terpolymerisat, welches aus mindestens einem Anhydrid einer monoethylenisch ungesättigten C₄- bis C₆-Dicarbonsäure als Komponente (B1) erhältlich ist. Es kommen hier insbesondere die eine cyclische Struktur aufweisenden Anhydride von Fumarsäure, Itaconsäure, Mesaconsäure, Methylenmalonsäure, Citraconsäure und vor allem Maleinsäure in Betracht.

Um Eigenschaften wie die Löslichkeit zu beeinflussen, wird eine Komponente (B2) eingesetzt. Als Komponente (B2) werden üblicherweise solche Olefine als Monomere eingesetzt, welche in α-Stellung zur olefinischen Doppelbindung nur Kohlenstoffatome ohne elektronenziehende Substituenten und/oder Wasserstoffatome tragen. Die Elektronendichte der olefinischen Doppelbindung ist hier nicht wie bei der Komponente (B1) über eine Konjugation mit einem π-Elektronensysteme einer Carbonyl- (-CO), Cyano- (-CN), Nitro- (-NO₂) oder Sulfogruppe (-SO₂-) herabgesetzt. Es handelt sich bei den Olefinen der Komponente (B2) um Isobutenhomo- oder Copolymerisate.

Die Herstellung von Polyisobuten durch Polymerisation von Isobuten mit Lewis-Säuren wie Aluminium-trichlorid, Bortrifluorid oder Titantetrachlorid als Katalysator ist seit langem bekannt. Je nach Reaktionstemperatur, Katalysator und Reinheit des eingesetzten Isobutens erhält man niedrigmolekulares, mittelmolekulares oder hochmolekulares Polyisobuten. Ein Überblick über Verfahren zur Polyisobuten-Herstellung findet sich auch in Ullmann's Encyclopedia of Industrial Chemistry, 5th Edition, Vol. A 21, 1992, Seite 555 bis 561. Kennedy und Ivan beschreiben in " Carbocationic Macromolecular Engineering", Hanser-Verlag, 1991, weitere Verfahren (lebende Polymerisation) zur Herstellung von Polyisobuten. Neben den reinen Isobutenhomopolymerisaten sind auch Isobutencopolymerisate als Komponente (B2) von Bedeutung.

Die Ausführungsform der vorliegenden Erfindung ist ein Terpolymerisat, welches aus einem Isobutenhomo- oder -copolymerisat mit einem zahlenmittleren Molekulargewicht Mₙ von 100 bis 500.000, vorzugsweise von 120 bis 50.000, insbesondere von 350 bis 20.000, vor allem von 500 bis 2500, als Komponente (B2) erhältlich ist. Unter den Begriff "Isobutenhomopolymerisat" fallen im Rahmen der vorliegenden Erfindung auch oligomere Isobutene, wie dimeres, trimeres, tetrameres, pentameres, hexameres und heptameres Isobuten.

Als Isobutenhomo- bzw. -copolymerisat kann prinzipiell jedes gängige und kommerziell erhältliche Polyisobuten eingesetzt werden. Gängige und kommerziell erhältliche Poly-isobutene sind meist Isobutenhomopolymerisate oder Isobutencopolymerisate mit einem überwiegenden Anteil an Isobuteneinheiten [-CH₂-C(CH₃)₂-]. Vorzugsweise wird ein sogenanntes "reaktives" Polyisobuten eingesetzt. "Reaktive" Polyisobutene unterscheiden sich von den "niedrigreaktiven" Polyisobutenen durch einen höheren Gehalt an terminal angeordneten Doppelbindungen. So enthalten reaktive Polyisobutene wenigstens 50 Mol.-%, bezogen auf die Gesamtanzahl an Polyisobuten-Makromolekül-einheiten, solche terminal angeordnete Doppelbindungen. Besonders bevorzugt sind Polyisobutene mit wenigstens 60 Mol.-% und insbesondere mit wenigstens 80 Mol.-%, bezogen auf die Gesamtantanzahl an Polyisobuten-Makromoleküleinheiten, terminal angeordneten Doppelbindungen. Bei den terminal angeordneten Doppelbindungen kann es sich sowohl um Vinyldoppelbindungen [-CH=C(CH₃)₂] (β-Olefin) als auch um Vinyliden-Doppelbindungen [-CH-C(=CH₂)-CH₃] (α-Olefin) handeln.

Eine bevorzugte Ausführungsform der vorliegenden Erfindung ist ein Terpolymerisat, welches aus einem Isobutenhomo- oder -copolymerisat mit einem Gehalt an endständigen Vinyliden-Doppelbindungen von mindestens 60 %, insbesondere von mindestens 80 Mol-%, als Komponente (B2) erhältlich ist.

Es werden meist Isobutenhomo- bzw. -copolymerisate eingesetzt, die einheitliche oder weitgehend einheitliche Polymergerüste aufweisen. Darunter werden im Rahmen der vorliegenden Erfindung üblicherweise solche Polymerisate verstanden, die zu wenigstens 85 Gew.-%, vorzugsweise zu wenigstens 90 Gew.-% und insbesondere zu wenigstens 95 Gew.-% aus Isobuteneinheiten [-CH₂-C(CH₃)₂-] aufgebaut sind.

Weiterhin weisen die als Komponente (B2) eingesetzten Isobutenhomo- oder-copolymerisate üblicherweise einen Polydispersitätsindex (PDI) von 1,05 bis 10, insbesondere 1,05 bis 4, vor allem 1,05 bis 2,0, auf. Unter Polydispersität versteht man den Quotienten aus gewichtsmittlerem Molekulargewicht M_{w} und zahlenmittlerem Molekulargewicht Mₙ (PDI = M_{w}/Mₙ).

Unter Isobutenhomo- oder -copolymerisaten werden im Rahmen der vorliegenden Erfindungen auch alle durch kationische oder lebende kationische Polymerisation erhältlichen Polymerisate verstanden, die vorzugsweise wenigstens 60 Gew.-% Isobuten, besonders bevorzugt wenigstens 80 Gew.-%, stärker bevorzugt wenigstens 90 Gew.-% und vor allem wenigstens 95 Gew.-% Isobuten einpolymerisiert enthalten. Daneben können diese Polymerisate weitere Butenisomere wie 1- oder 2-Buten sowie davon verschiedene olefinisch ungesättigte Monomere, die mit Isobuten unter kationischen Polymerisationsbedingungen copolymerisierbar sind, einpolymerisiert enthalten.

Als Isobuten-Einsatzstoffe für die Herstellung von Isobutenhomo- oder -copolymerisaten, die als Edukte für die vorliegende Erfindung dienen können, eignen sich dementsprechend sowohl Isobuten selbst als auch isobutenhaltige C₄-Kohlenwasserstoff-ströme, beispielsweise C₄-Raffinate, C₄-Schnitte aus der Isobuten-Dehydrierung, C₄-Schnitte aus Steamcrackern, FCC(" Fluid Catalyzed Cracking")-Crackem, sofern sie weitgehend von darin enthaltenem 1,3-Butadien befreit sind. Besonders geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial können die von Isobuten verschiedenen Kohlenwasserstoffe die Rolle eines inerten Lösungsmittels übernehmen.

Als unter kationischen Polymerisationsbedingungen copolymerisierbare Monomere für Isobutencopolymerisate kommen Vinylaromaten wie Styrol und α-Methylstyrol, C₁- bis C₄-Alkylstyrole wie 2-, 3- und 4-Methylstyrol sowie 4-tert.-Butylstyrol, Isoolefine mit 5 bis 10 C-Atomen wie 2-Methylbuten-1, 2-Methyl-penten-1, 2-Methylhexen-1, 2-Ethyl-penten-1, 2-Ethylhexen-1 und 2-Propylhepten-1 in Betracht.

Als Komponente (B2) geeignete Polyisobutene sind alle durch gängige kationische oder lebende kationische Polymerisation erhältlichen Isobutenhomo- oder -copolymeriate. Bevorzugt sind jedoch so genannte "reaktiven" Polyisobutene, die vorstehend beschrieben wurden.

Kommerziell verfügbare und als Komponente (B2) geeignete Polyisobutene sind beispielsweise die Glissopal®-Marken der BASF SE wie Glissopal 550, Glissopal 1000 und Glissopal 2300 (wobei die Glissopal-Marken reaktive Polyisobutene darstellen) sowie die Oppanol®-Marken der BASF SE wie Oppanol B10, B12 und B15.

Als Alkoxyvinylsilane eignen sich für die Monomerkomponente (B3) vorzugsweise Verbindungen mit der allgemeinen Formel I

R¹R²C=CR³-Si(R⁴)ₘ(OR⁵)₃₋ₘ (I)

in der m die Zahl 0, 1 oder 2 bezeichnet, R¹, R², R³, R⁴ und R⁵ gleich oder verschieden sein können und für C₁- bis C₂₀-Alkyl-, C₅- bis C₂₀-Cycloalkyl-, C₆- bis C₂₀-Aryl- oder C₇- bis C₂₀-Aralkylreste stehen, wobei R¹, R², R³ und R⁴ auch Wasserstoff bedeuten können.

Für den Zweck der Erläuterung der vorliegenden Erfindung, insbesondere für die Spezifizierung der Komponenten (B1) und (B3), umfasst der Ausdruck "C₁- bis C₂₀-Alkyl" entsprechende geradkettige und verzweigte Alkylgruppen. Vorzugsweise handelt es sich dabei um geradkettige oder verzweigte C₁- bis C₁₀-Alkyl-, insbesondere C₁- C₈-Alkyl- und vor allem C₁- bis C₄-Alkyl-gruppen. Beispiele für derartige Alkylgruppen sind Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethyl-propyl, 1,1-Dimethylpropyl, 2,2-Dimethyl-propyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Di-methylbutyl, 3,3-Dimethylbutyl, 1,1,2-Trimethylpropyl, 1,2,2-Trimethyl-propyl, 1-Ethyl-butyl, 2-Ethylbutyl, 1-Ethyl- 2-methylpropyl, n-Heptyl, 2-Heptyl, 3-Heptyl, 2-Ethylpentyl, 1-Propylbutyl, n-Octyl, 2-Ethylhexyl, 2-Propylheptyl, n-Nonyl und n-Decyl.

Weiterhin eignen sich als derartige Alkylreste auch analoge Hydrocarbylreste, die durch Heteroatome wie beispielsweise Sauerstoff unterbrochen sein oder aromatische oder heterocyclische Ringe inkorporiert haben können.

Der Ausdruck "C₅- bis C₂₀-Cycloalkyl" umfasst im Sinne der vorliegenden Erfindung unsubstituierte als auch substituierte Cycloalkylgruppen, vorzugsweise C₅- bis C₇-Cycloalkylgruppen wie Cyclopentyl, Cyclohexyl oder Cycloheptyl. Diese können im Falle einer Substitution 1, 2, 3. 4 oder 5, vorzugsweise 1, 2 oder 3 Substituenten tragen. Diese Substituenten sind dann üblecherweise die oben genannten Alkylreste.

Der Ausdruck "C₆- bis C₂₀-Aryl" umfasst im Sinne der vorliegenden Erfindung unsubstituierte als auch substituierte aromatische Reste wie Phenyl, o-, m- oder p-Tolyl, Xylyl oder Naphthyl. Auftretende Substituenten sind hier üblicherweise die oben genannten Alkylreste.

Der Ausdruck "C₇- bis C₂₀-Aralkyl" umfasst im Sinne der vorliegenden Erfindung durch aromatische Reste substituierte Alkylgruppen wie Benzyl, o-, m- oder p-Methylbenzyl, 1-Phenylethyl, 2-Phenylethyl, 3-Phenylpropyl oder 4-Phenylbutyl.

Die Alkoxyvinylsilane der Monomerkomponente (B3) tragen neben dem gegebenenfalls durch R¹, R² und/oder R³ substituierten Vinylrest mit einer polymerisationsfähigen ethylenischen Doppelbindung einen, zwei oder drei Reste -OR⁵, welche vorzugsweise C₁- bis C₂₀-Alkyloxyreste, insbesondere C₁- bis C₈-Alkyloxyreste, vor allem C₁- bis C₄-Alkyl-oxyreste sind, die gleich oder verschieden sein können, wobei übrige, noch freie Valenzen des Siliziumatoms, wenn solche auftreten, vorzugsweise durch C₁- bis C₄-Alkyl, C₅- bis C₇-Cycloalkyl, Phenyl und/oder Wasserstoff als Substituenten R⁴ abgesättigt sind.

In einer bevorzugten Ausführungsform ist das erfindungsgemäße Terpolymerisat aus mindestens einem Trialkoxyvinylsilan der allgemeinen Formel la

H₂C=CH-Si(OR⁵)₃ (Ia)

in der alle drei Alkoxyreste gleich sind und R⁵ die oben genannte Bedeutung hat, als Komponente (B3) erhältlich.

Besonders bevorzugte Vertreter der Verbindungen la sind Tri-(C₁- bis C₂₀-alkyloxy)-vinylsilane, insbesondere Tri-(C₁- bis C₈-alkyloxy)vinylsilane, vor allem Tri-(C₁- bis C₄-alkyloxy)vinylsilane, in denen der Ausdruck "alkyl" die oben genannte Bedeutung von C₁- bis C₂₀-Alkylresten sowie analogen Hydrocarbylresten, die durch Heteroatome wie beispielsweise Sauerstoff unterbrochen sein oder aromatische oder heterocyclische Ringe inkorporiert haben können, hat.

Typische Beispiele für Verbindungen der allgemeinen Formel I sind Vinyltrimethoxysilan, Vinyltriethoxysilan, Vinyltripropoxysilan, Vinyltriisopropoxysilan, Vinyltributoxysilan, Vinyl-tris(β-methoxyethoxy)silan, Vinylmethyldiethoxysilan, Vinylethyldimethoxysilan, Vinylcyclohexyldimethoxysilan, Vinylphenyldimethoxysilan, Vinyldimethylmonoethoxysilan und Vinylmethylphenylmonoethoxysilan.

Vorzugsweise ist das erfindungsgemäße Terpolymerisat erhältlich durch Copolymerisation von
(B1) 5 bis 60 Gew.-%, insbesondere 10 bis 40 Gew.-%, mindestens eines elektronendefizienten Olefins,
(B2) 5 bis 80 Gew.-%, insbesondere 15 bis 70 Gew.-%, mindestens eines Isobutenhomooder copolymerisates gemäß Anspruch 1, und
(B3) 5 bis 60 Gew.-%, insbesondere 15 bis 50 Gew.-%, mindestens eines Alkoxyvinylsilans,
wobei die Summe der Gew.-% der Komponenten (B1), (B2) und (B3) jeweils 100 Gew.-% ergibt.

Insbesondere ist das erfindungsgemäße Terpolymerisat erhältlich durch Copolymerisation von
(B1) 5 bis 60 Gew.-%, insbesondere 10 bis 40 Gew.-%, mindestens eines Anhydrides einer monoethylenisch ungesättigten C₄- bis C₆-Dicarbonsäure,
(B2) 5 bis 80 Gew.-%, insbesondere 15 bis 70 Gew.-%, eines Isobutenhomo- oder -copolymerisates mit einem zahlenmittleren Molekulargewicht Mₙ von 100 bis 500.000, und
(B3) 5 bis 60 Gew.-%, insbesondere 15 bis 50 Gew.-%, mindestens eines Alkoxyvinylsilans, wobei die Summe der Gew.-% der Komponenten (B1), (B2) und (B3) 100 Gew.-% ergibt.

In einer bevorzugten Ausführungsform hat das erfindungsgemäße Terpolymerisat einen im Wesentlichen alternierenden Strukturaufbau. Dabei wechselt in der Polymerkette üblicherweise eine Monomereinheit (B1) jeweils mit einer Monomereinheit (B2) oder mit einer Monomereinheit (B3) ab. Soweit vorhanden, sind die Monomereinheit (B2) und (B3) dabei vorzugsweise statistisch verteilt. Dabei stehen die Monomereinheiten (B1) mit der Summe von (B2) und (B3) meist in einem Verhältnis von 0,9 zu 1,1 bis 1,1 zu 0,9.

In einer anderen Ausführungsform können die Monomereinheiten statistischer verteilt sein. So können die elektronendefizienten Olefine (B1) im Überschuss vorliegen, wobei die Monomereinheiten (B1) mit der Summe von (B2) und (B3) in einem Verhältnis von mehr als 1,1 zu 0,9 bis 1,5 zu 0,5 stehen. Weiterhin können die elektronendefizienten Olefine (B1) aber auch im Unterschuß vorliegen, wobei die Monomereinheiten (B1) mit der Summe von (B2) und (B3) in einem Verhältnis von weniger als 0,9 zu 1,1 bis 0,5 zu 1,5 stehen.

Das erfindungsgemäße Terpolymerisat hat in der Regel ein zahlenmittleres Molekulargewicht Mₙ von 500 bis 2.000.000, insbesondere von 750 bis 200.000, vor allem von 1000 bis 75.000 (bestimmt durch die Analytische Ultrazentrifuge).

Das erfindungsgemäße Terpolymerisat weist in der Regel einen Polydispersitätsindex (PDI) von 1,5 bis 15, insbesondere von 2,0 bis 12, vor allem von 2,5 bis 8, auf.

Das erfindungsgemäße Terpolymerisat kann - je nach Gehalt an Monomereinheiten der Komponente (B2) - als sprödes Harz [vornehmlich bei niedrigen Gehalten an (B2)], als viskoses Öl oder weiches Harz [vornehmlich bei hohen Gehalten an (B2)] vorliegen.

Das nachfolgende Formelschema soll beispielhaft die Bildung eines typischen Vertreters des erfindungsgemäßen Terpolymerisates veranschaulichen (n = um 2 verringerte Anzahl der Isobuteneinheiten im eingesetzten Polyisobuten; PIB = Reststruktur der Polyisobuteneinheit):

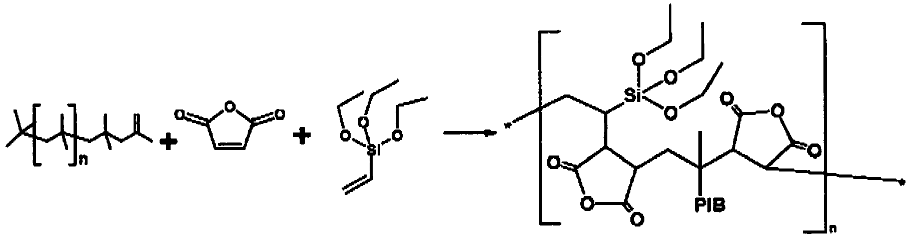

Die erfindungsgemäße Komponente B) ist erhältlich durch ein Verfahren, welches dadurch gekennzeichnet ist, dass man die Komponenten (B1), (B2) und (B3) in Substanz, in Lösung oder in Suspension radikalisch miteinander copolymerisiert.

Die Methoden der radikalischen Substanz-, Lösungs- und Suspensionspolymerisation sind dem Fachmann hinlänglich bekannt und brauchen hier daher nicht in aller Ausführlichkeit erläutert zu werden. Exemplarisch wird auf Übersichtsliteratur wie Houben-Weyl, Methoden der organischen Chemie, 4. Auflage, G. Thieme Verlag, Band 14 und Ergänzungsband E20, und auf die dort zitierte Originalliteratur verwiesen. Auf den Seiten 15-73 des Bandes E20 werden chemische Starter für die radikalische Polymerisation genannt und auf den Seiten 74-93 desselben Bandes wird das Auslösen einer Polymerisation mit energiereicher Strahlung beschrieben. Eine weitere diesbezügliche Zusammenfassung ist das Handbook of Polymer Synthesis, 2nd Edition, erschienen 2005 im Marcel Dekker Verlag. Nachfolgend sollen jedoch diejenigen Verfahrensparameter angesprochen werden, welche für die Durchführung der radikalischen Substanz-, Lösungs- oder Suspensionspolymerisation der Komponenten (B1), (B2) und (B3) zum erfindungsgemäßen Terpolymerisat (B) kritisch sein können.

Bei allen genannten Polymerisationsverfahren wird in aller Regel unter Ausschluss von Sauerstoff gearbeitet, vorzugsweise in einem Stickstoffstrom. Man führt die Polymerisation üblicherweise bei Temperaturen von 0 bis 150°C, insbesondere bei 20 bis 130°C, vor allem bei 40 bis 120°C, und bei einem Druck von 0,5 bis 10 bar, insbesondere 0,7 bis 1,3 bar, durch. Die Polymerisation kann kontinuierlich oder diskontinuierlich durchgeführt werden. Bei der Lösungs- und der Suspensionspolymerisationsmethode verwendet man zweckmäßigerweise ein unter Polymerisationsbedingungen nicht reaktives Lösungsmittel, zum Beispiel einen Kohlenwasserstoff wie Toluol oder Xylol, einen halogenierten Kohlenwasserstoff wie Dichlormethan oder eine Mischung hieraus als Lösungs- bzw. Suspendierungsmittel. In einer anderen Variante verwendet man gezielt Lösungsmittel (auch im Gemisch), die unter Polymerisationsbedingungen reagieren können (z.B. Ketone wie Aceton oder Butanon), um Radikalketten abzubrechen und so das Molekulargewicht einzustellen.

Hierbei geeignete Polymerisationsinitiatoren sind beispielsweise Peroxidverbindungen wie tert.-Butylperoxybenzoat, tert.-Butylperpivalat, tert.-Butylperneodecanoat, tert.-Butylperethylhexanoat, tert.-Butylperisobutyrat, Di-tert.-butylperoxid, Di-tert.-amylperoxid, Diacetylperoxidicarbonat oder Dicyclohexylperoxidicarbonat oder Azoverbindungen wie 2,2'-Azobis(isobutyronitril). Diese Polymerisationsinitiatoren können allein oder in Mischung miteinander eingesetzt werden. Die Polymerisation kann aber auch durch Strahlung, beispielsweise durch ultraviolettes Licht, durch Gamma- oder durch Laserstrahlung, ausgelöst werden.

Weiterhin kann die erfindungsgemäße Komponente (B) als Folgeprodukt des erfindungsgemäßen Terpolymerisates auch ein thermisch vernetztes Terpolymerisat sein, welches durch Erhitzen des erfindungsgemäßen Terpolymerisates (B) auf Temperaturen über 80°C (zum Beispiel auf 100°C bis 120°C oder auf 120°C bis 150°C) für mindestens 10 Minuten erhältlich ist. Hierbei wird keine nennenswerte Menge Alkohol abgespalten und die Vernetzung erfolgt in der Regel weitgehend durch Ausbildung von Si-O-Si-Brücken; möglicherweise abgespaltenen Alkoxygruppen werden durch die Dicarbonsäureanhydrid-Gruppierungen abgefangen, welche dabei zu Carboxylat-Gruppierungen ringgeöffnet werden. Da Wasser in diesem Schritt nicht benötigt wird, kann Feuchtigkeitsausschluß vorteilhaft sein.

Das nachfolgende Formelschema soll beispielhaft eine typische Struktur eines solchen thermisch vernetzten Terpolymerisates veranschaulichen (PIB = Reststruktur der Polyisobuteneinheit):

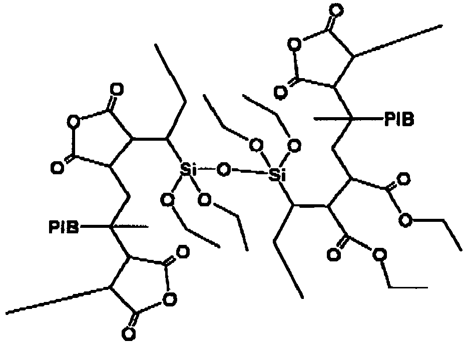

Weiterhin kann als (B) ein Folgeprodukt des erfindungsgemäßen Terpolymerisates eingesetzt werden, welches durch Umsetzung des erfindungsgemäßen Terpolymerisates mit ein- oder mehrwertigen Alkoholen und/oder ein- oder mehrwertigen Aminen erhältlich ist. Die Alkohole und Amine werden, beispielsweise über die Gasphase oder in flüssiger Form durch Benetzung oder Besprühung, in entsprechenden, meist geringen Mengen mit dem erfindungsgemäßen Terpolymerisat in Kontakt gebracht; man kann die Alkohole oder Amine aber auch mit einer Lösung des erfindungsgemäßen Terpolymerisates in einem inertem Lösungsmittel wie Toluol in Kontakt und zur Umsetzung bringen. Die Umsetzungsdauer beträgt dabei wenige Minuten bis wenige Tage und wird mit Aminen üblicherweise bei Temperaturen von 10°C bis 60°C vorgenommen, während sich im Falle der Alkohole ein Bereich von 50°C bis 120°C bewährt hat. Hierbei wird in der Regel die Vernetzung durch Ausbildung von Si-O-Si-Brücken noch nicht bewirkt. Als Alkohole können hierbei beispielsweise Methanol, Ethanol, Propanol, iso-Propanol, tert.-Butanol, Methoxyethanol, Ethylenglykol oder Glycerin, als Amine beispielsweise Monobutylamin, Diethylamin, Trimethylamin, Triethylamin, Ethylendiamin, 3-(N,N-Dimethylamino)-propylamin oder auch Alkanolamine wie Triethanolamin oder Triisopropanolamin eingesetzt werden. Die Alkohole und Amine können auch noch weitere funktionelle Gruppierungen wie Siloxangruppen zur weiteren Modifizierung des Polymerisates enthalten. Beispiele hierfür sind 3-Aminopropyl-triethoxysilan, 3-Aminoethyl-triethoxysilan und 3-Aminopropyl-trimethoxysilan.

Ebenso können Polyethylenoxide oder Polypropylenoxide in einem Molekulargewichtsbereich von 200 bis 10.000 eingesetzt werden. In einem Fall sind die Polymerketten difunktionell, also an beiden Enden mit einer -OH-Gruppe oder -NH₂-Gruppe terminiert, das Polymer ist difunktionell. In einem anderen Fall ist ein Ende verethert, R-O- (wobei R für einen beliebigen Kohlenwasserstoffrest steht) stellt also ein Kettenende dar, wobei das andere Ende -OH oder -NH₂ sein kann, diese Polymere sind monofuktionell.

Die Umsetzung monofunktioneller (einwertiger) Amine und Alkohole läuft zunächst im wesentlichen ohne Vernetzung ab, da in Lösung weder Gelbildung noch Ausfällungen auftreten. Durch längeres Erhitzen zum Beispiel über 1 bis 3 oder 2 bis 8 Stunden auf höhere Temperaturen, zum Beispiel auf 50°C bis 90°C oder auf 70°C bis 150°C, kann als Folgereaktion auch eine Vernetzung unter Ausbildung von Si-O-Si Bindungen stattfinden. Das nachfolgende Formelschema soll beispielhaft eine typische Struktur eines solchen substituierten Terpolymerisates mit ringgeöffneten Anhydrid-Gruppierungen veranschaulichen. (PIB = Reststruktur der Polyisobuteneinheit):

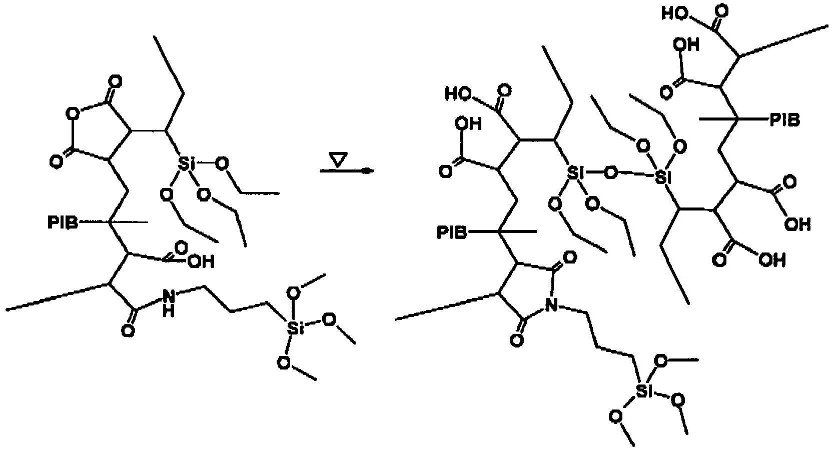

Darüber hinaus kann B) als Folgeprodukt des erfindungsgemäßen Terpolymerisates auch ein hydrolytisch vernetztes Terpolymerisat sein, welches durch Umsetzung des erfindungsgemäßen Terpolymerisates mit Wasser erhältlich ist. Das Wasser kann dabei in Form von Wasserdampf, Luftfeuchtigkeit oder geringen Mengen flüssigen Wassers mit dem erfindungsgemäßen Terpolymerisat in Kontakt gebracht werden. Die Umsetzungsdauer beträgt dabei wenige Minuten bis wenige Tage und wird üblicherweise bei Temperaturen von 10°C bis 60°C vorgenommen. Hierbei wird in der Regel die Vernetzung ebenfalls weitgehend durch Ausbildung von Si-O-Si-Brücken bewirkt; in der Folge werden dann die Dicarbonsäureanhydrid-Gruppierungen hydrolytisch zu Carboxylat-Gruppierungen ringgeöffnet, wobei sich freie Carboxylgruppen ausbilden.

Das nachfolgende Formelschema soll beispielhaft eine typische Struktur eines solchen hydrolytisch vernetzten Terpolymerisates mit ringgeöffneten Anhydrid-Gruppierungen mit vorausgehender Vernetzung über Si-O-Si-Brücken veranschaulichen (PIB = Reststruktur der Polyisobuteneinheit):

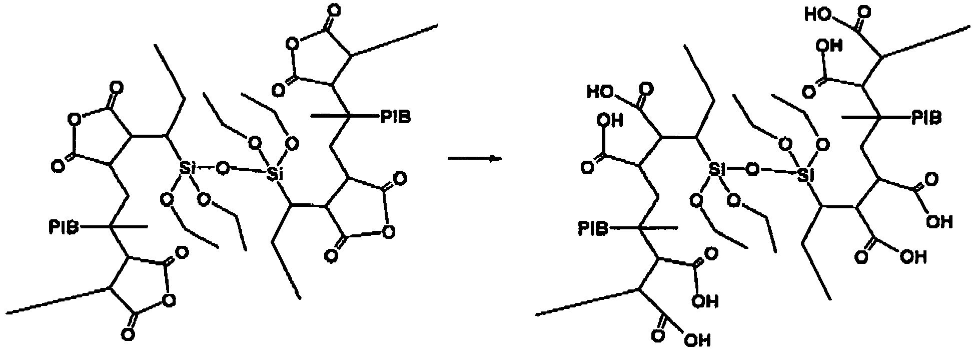

Bei der Umsetzung polyfunktioneller (zwei- oder mehrwertiger) Amine und Alkohole findet die Vernetzung einfach statt; es werden in Lösung Gelbildung und Ausfällungen beobachtet.

Ebenso geeignet sind als Folgeprodukte des erfindungsgemäßen Terpolymerisates auch ein über Polyamine und/oder Polyole vernetztes Terpolymerisat, welches durch Umsetzung des erfindungsgemäßen Terpolymerisates mit Polyaminen (mehrwertigen Aminen) und/oder Polyolen (mehrwertigen Alkoholen) erhältlich ist. Die Umsetzungsdauer beträgt dabei wenige Minuten bis wenige Tage und wird üblicherweise bei Temperaturen von 10°C bis 140°C vorgenommen. Hierbei werden dann in der Regel die Dicarbonsäureanhydrid-Gruppierungen zu Carbonamid- oder Carbonester-Gruppierungen ringgeöffnet, wodurch Vernetzung bewirkt wird. Dabei können die Carbonamidgruppen auch mit einer freien Carbonsäure zu Imiden cyclisieren. Zusätzlich kann die Vernetzung ebenfalls durch Ausbildung von Si-O-Si-Brücken bewirkt werden.

Weitere Folgeprodukte des erfindungsgemäßen Terpolymerisates sind z.B. auch eine wässrig-alkalische, alkoholisch-alkalische, alkoholisch-aminische oder wässrig-basische TerpolymerisatAufbereitung, welche durch Behandeln des erfindungsgemäßen Terpolymerisates mit wässriger oder alkoholischer Alkalimetallhydroxid-Lösung oder mit wässriger oder alkoholischer Amin-Lösung erhältlich ist. Die Behandlungsdauer beträgt dabei meist 10 bis 100 Minuten und wird üblicherweise bei 20°C bis 60°C vorgenommen. Man erhält hierbei in der Regel echte Lösungen, Emulsionen, Dispersionen oder gelartige Aufbereitungen des Terpolymerisates. Hierbei werden die Siloxan-Gruppierungen meist weitgehend zu Silikat-Gruppierungen (-SiO₃³⁻) hydrolysiert und die Dicarbonsäureanhydrid-Gruppierungen hydrolytisch zu Carboxylat-Gruppierungen (-COO⁻) ringgeöffnet. Letzere liegen bei Verwendung einer wässrigen Amin-Lösung teilweise oder vollständig als Carbonsäureamid-Gruppierungen vor. Als Alkalimetallhydroxid-Lösungen können hierbei insbesondere wässrige oder ethanolische Natron- oder Kalilauge verwendet werden. Als Amine können hierbei beispielsweise Monobutylamin, Diethylamim, Trimethylamin, Triethylamin, Di- oder Polyamine wie Ethylendiamin oder 3-(N,N-Dimethylamino)propylamin oder auch Alkanolamine wie Triethanolamin oder Triisopropanolamin eingesetzt werden; bei Verwendung von wässrigen Di- oder Polyaminen treten, soweit nur eine Aminfunktion reaktionsfähig ist, meist betainartige Strukturen auf. Die so erhaltene alkoholisch-alkalische bzw. alkoholisch-basische oder wässrig-alkalische bzw. wässrig-basische Terpolymerisat-Zubereitung ist in der Regel über eine längere Zeit lagerstabil.

Derartige Zubereitungen (wäßrig oder alkoholische) können bevorzugt -vor der Einarbeitung in das jeweilige Polyamid A)- getrocknet oder sprühgetrocknet werden.

Das nachfolgende Formelschema soll beispielhaft zwei typische Strukturen einer solchen wässrig hydrolysierten Terpolymerisat-Aufbereitung - zum einen mit wässriger Natronlauge, zum anderen mit wässrigem 3-(N,N-Dimethylamino)propylamin - veranschaulichen (PIB = Reststruktur der Polyisobuteneinheit):

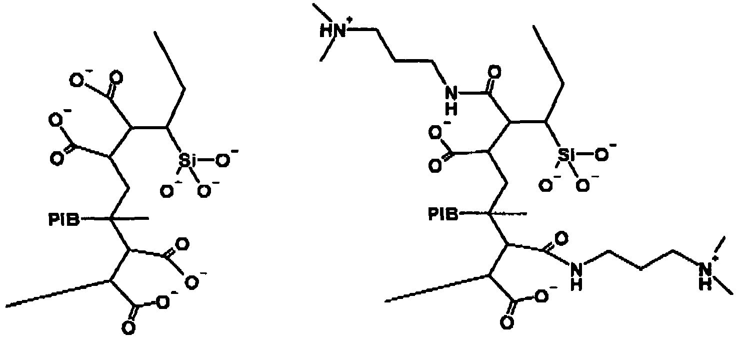

Als Komponente C) können die erfindungsgemäßen Formmassen 0 bis 50, vorzugsweise 1 bis 40 Gew.-% insbesondere 5 bis 35 Gew.-% eines faser- oder teilchenförmigen Follstoffes oder deren Mischungen enthalten.

Als faser- oder teilchenförmige Füllstoffe C) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasem, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 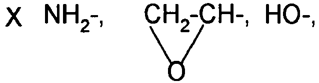
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.
Geeignet sind auch Langglasfasern als Komponente C1) welche als Roving eingesetzt werden können. Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.
Bevorzugt beträgt das L/D (Länge/Durchmesser)-Verhältnis 100 bis 4000, insbesondere 350 bis 2000 und ganz besonders 350 bis 700

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente D) können die Formmassen bis zu 50, vorzugsweise bis zu 20 Gew.-% weiterer Zusatzstoffe enthalten.

Als Komponente D) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente D) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid,-Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 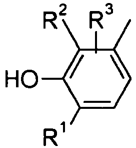 in Betracht, in der bedeuten:
R¹ und R² eine Alkylgruppe, eine substituierte Alkylgruppe oder eine substituierte Triazol gruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 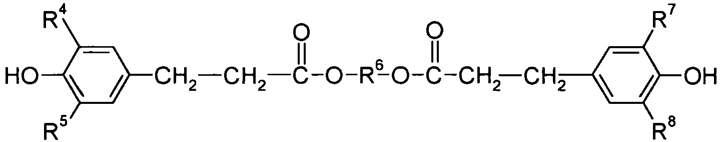 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind

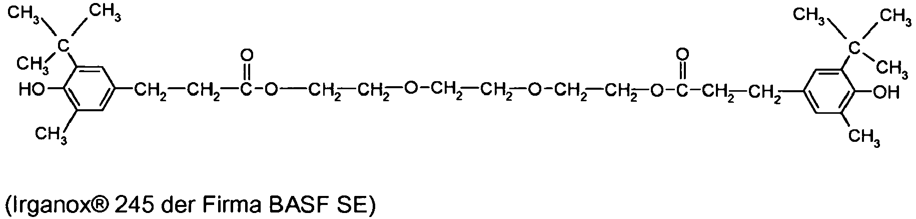

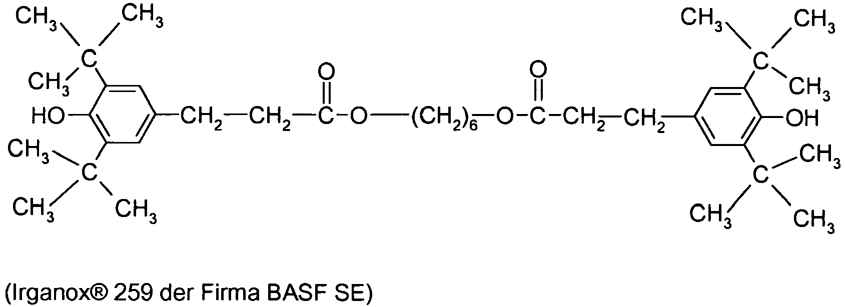

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat), Pentaerythrityl-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxy-phenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien D), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis D) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente D) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente D) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe D) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

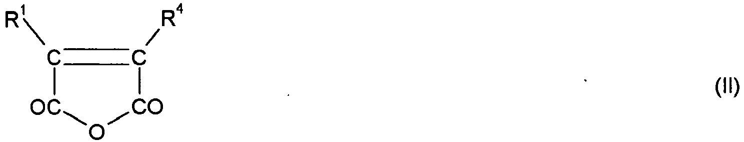

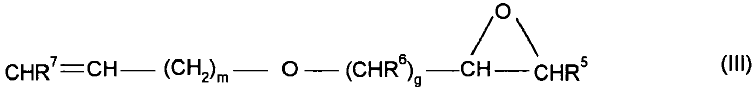

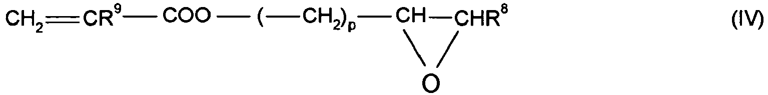

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidyl-methacrylat, (Meth)acrylsäure und/oder Maleinsäureanhydrid, und |
| 1 bis 45, | insbesondere 5 bis 40 Gew.-% n-Butylacrylat und/oder 2-Ethylhexyl-acrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

in einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 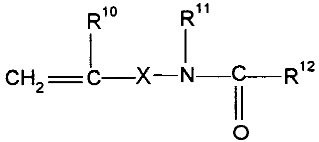 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 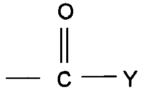
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvemetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvemetzende Monomere sind Allylgruppen enthaltende Monomere, insbesondere Allylester von ethylenisch ungesättigten Carbonsäuren wie Allyl-acrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.
Nach einer weiteren bevorzugten Arbeitsweise können die Komponenten B) sowie gegebenenfalls C) und D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen langglasfaserverstärkten Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, Insbesondere von 5 bis 14 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 2 bis 8, insbesondere 3 bis 4,5.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere bei Zugfestigkeit,·E·Modul, der Reißfestigkeit und der Kerbschlagzähigkeit erreicht.

Nach der Formteilverarbeitung z.B. durch Spritzguss beträgt die Faserlänge üblicherweise 0,5 bis 10 mm, insbesondere 1 bis 3 mm.

Die erfindungsgemäßen thermoplastischen Formmassen zeichnen sich durch eine gute Hydrolysestabilität bei gleichzeitig guter Mechanik, sowie eine deutlich verbesserte Oberfläche sowie thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:

### Komponente A/1

Polyamid 66 mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).

### Herstellung Komponente B

Polymerisation von Maleinsäureanhydrid, Polyisobuten und Vinyltriethoxysilan 380 g Vinyltriethoxysilan, 80 ml Toluol, 200 g handelsübliches reaktives Polyisobuten mit Mₙ=1000 (Glissopal® 1000) und 200 g Maleinsäureanhydrid wurden in einem 500 ml-Vierhalskolben vorgelegt und auf 95°C Innentemperatur erhitzt. Die resultierende Reaktionsmischung wurde mit Stickstoff über ein Einleitrohr begast. 4 g tert.-Butylperoxybenzoat, gelöst in in 40 ml Toluol, wurden über 4 Stunden zugegeben. Im Verlauf der Reaktion wurde der trübe Ansatz ölig klar und homogen (Feststoffgehalt: 66 Gew.-%). Zur Aufarbeitung wurde das Lösungsmittel am Rotationsverdampfer bei 130°C und bei 500 bis 8 mbar abdestilliert. Man erhielt 115 des gewünschten Terpolymerisates in Form eines viskosen Öls, das rasch zu einem spröden, glasartigen Rückstandes erstarrte, der durch ¹H-NMR-Spektroskopie charakterisierbar war.

¹H-NMR (400 MHz, 16 Scans, CDCl₃): Die Signale für Maleinsäureanhydrid (δ = 7,00 ppm) sowie die Doppelbindungen von Vinylsiloxan (δ = 6,13 ppm, 6,02 ppm und 5,90 ppm) und Polyisobuten (δ = 5,16 ppm, 4,84 ppm und 4,64 ppm) waren verschwunden. Weiterhin vorhanden waren die Signale für die Ethoxyfunktion (δ = 3,84 ppm und 1,24 ppm) und das Polyisobuten (δ = 1,42 ppm, 1,11 ppm und 0,99 ppm). Neu entstanden waren breite Signale, die der neuen Polymerkette zuzuordnen sind (δ = 3,4 ppm bis 2,4 ppm: CH₂-CH-CO; δ = 2,2 ppm bis 1,5 ppm: CH₂-CH-CO).

### Komponente C

Glasfasern

### Komponente D/1

Calciumstearat

### Komponente D/2

CuJ/KJ im Verhältnis 1:4 (20iger Batch in PA6)

### Komponente D/3

40 %iger PA6 Masterbatch mit Nigrosin

Die Formmassen wurden auf einer ZSK 30 bei einem Durchsatz von 25 kg/h und ca. 280°C flachem Temperaturprofil hergestellt.

Es wurden folgende Messungen durchgeführt:
Zugversuch nach ISO 527, Mechanikkennwerte vor und nach Hydrolyselagerung bei 130°C in einer 50:50 Mischung aus Wasser und Glysantin® G48.

VZ: c = 5 g/l in 96 %iger Schwefelsäure, nach ISO 307

Die Zusammensetzungen der Formmassen und die Ergebnisse der Messungen sind den Tabellen zu entnehmen.

**Tabelle 1:**

| Bsp. | A | C | D/1 | D/3 | D/2 | B |
|---|---|---|---|---|---|---|
| | (%) | (%) | (%) | (%) | (%) | (%) |
| 1V | 67.45 | 30 | 0.35 | 1.9 | 0.3 | - |
| 1 | 66.95 | 30 | 0.35 | 1.9 | 0.3 | 0.7 |

**Tabelle 2: Mechanik nach Hydrolyselagerung**

| Bsp. | E-modulus, [MPa] | | | |
|---|---|---|---|---|
| | 0h | 250h | 500h | 1000h |
| 1V | 9980 | 4570 | 4670 | 3880 |
| 1 | 9510 | 4420 | 4410 | 4050 |
| | | | | |

| Bsp. | Tensile strength [MPa] (Bruchspannung) | | | |
|---|---|---|---|---|
| | 0h | 250h | 500h | 1000h |
| 1V | 193 | 86 | 74 | 23 |
| 1 | 189 | 88 | 77 | 28 |
| | | | | |

| Bsp. | Elongation at break, [%] (Bruchdehnung) | | | |
|---|---|---|---|---|
| | 0h | 250h | 500h | 1000h |
| 1V | 3.7 | 4.2 | 3.0 | 0.7 |
| 1 | 3.8 | 4.6 | 2.9 | 0.8 |

## Patentansprüche

1. Thermoplastische Formmassen, enthaltend
A) 10 bis 99,9 Gew.-% eines thermoplastischen Polyamides,
B) 0,1 bis 20 Gew.-% eines Terpolymerisates, erhältlich durch Copolymerisation von
(B1) 5-60 Gew.-% mindestens eines elektronendefizienten Olefins,
(B2) 5 bis 85 Gew.-% mindestens eines Isobutenhomo- oder -copolymerisates mit einem zahlenmittleren Molekulargewicht Mₙ von 100 bis 500.000 und
(B3) 5-60 Gew.-% mindestens eines Alkoxyvinyisilans,
wobei die Summe der Gew.-% der Komponenten (B1), (B2) und (B3) jeweils 100 Gew.-% ergibt,
C) 0 bis 50 Gew.-% eines faser- oder teilchenförmigen Füllstoffes oder deren Mischungen,
D) 0 bis 50 Gew.-% weiterer Zusatzstoffe,
wobei die Summe der Gewichtsprozente der Komponenten A) bis D) 100 % ergibt.

2. Thermoplastische Formmassen nach Anspruch 1, enthaltend
A) 20 bis 98 Gew.-%
B) 0,1 bis 10 Gew.-%
C) 1 bis 40 Gew.-%
D) 0 bis 40 Gew.-%

3. Thermoplastische Formmassen nach den Ansprüchen 1 oder 2, wobei Komponente B) erhältlich ist aus mindestens einem Olefin, welches an seiner olefinischen Doppelbindung mindestens einen elektronenziehenden Substituenten ausgewählt aus der Gruppe -CO-, -CN, -NO₂ und -SO₂ trägt, als Komponente (B1).

4. Thermoplastische Formmassen nach den Ansprüchen 1 bis 3, wobei Komponente B) erhältlich ist aus mindestens einem Anhydrid einer monoethylenisch ungesättigten C₄- bis C₆-Dicarbonsäure als Komponente (B1).

5. Thermoplastische Formmassen nach den Ansprüchen 1 bis 4, wobei B) erhältlich ist aus mindestens einer Verbindung der allgemeinen Formel I
R¹R²C=CR³-Si(R⁴)ₘ(OR⁵)₃₋ₘ (I)
in der m die Zahl 0, 1 oder 2 bezeichnet, R¹, R², R³, R⁴ und R⁵ gleich oder verschieden sein können und für C₁- bis C₂₀-Alkyl-, C₅- bis C₂₀-Cycloalkyl-, C₆- bis C₂₀-Aryl- oder C₇-bis C₂₀-Aralkylreste stehen, wobei R¹, R², R³ und R⁴ auch Wasserstoff bedeuten können, als Komponente (B3).

6. Thermoplastische Formmassen nach den Ansprüchen 1 bis 5, wobei B) erhältlich ist aus mindestens einem Trialkoxyvinylsilan der allgemeinen Formel la
H₂C=CH-Si(OR⁵)₃ (Ia)
in der alle drei Alkoxyreste gleich sind und R⁵ die oben genannte Bedeutung hat, als Komponente (B3).

7. Thermoplastische Formmassen nach den Ansprüchen 1 bis 6, wobei B) erhältlich ist durch Copolymerisation von
(B1) 5 bis 60 Gew.-% mindestens eines Anhydrides einer monoethylenisch ungesättigten C₄- bis C₆-Dicarbonsäure,
(B2) 5 bis 80 Gew.-% eines Isobutenhomo- oder -copolymerisates mit einem zahlenmittleren Molekulargewicht Mₙ von 100 bis 500.000, und
(B3) 5 bis 60 Gew.-% mindestens eines Alkoxyvinylsilans,
wobei die Summe der Gew.-% der Komponenten (B1), (B2) und (B3) 100 Gew.-% ergibt.

8. Verwendung der thermoplastischen Formmassen gemäß den Ansprüchen 1 bis 7, zur Herstellung von Fasern, Folien und Formkörpern jeglicher Art.

9. Fasern, Folien und Formkörper jeglicher Art erhältlich aus den thermoplastischen Formmassen gemäß den Ansprüchen 1 bis 7.

## Claims

1. A thermoplastic molding composition comprising
A) from 10 to 99.9% by weight of a thermoplastic polyamide,
B) from 0.1 to 20% by weight of a terpolymer obtainable via copolymerization of
(B1) from 5 to 60% by weight of at least one electron-deficient olefin,
(B2) from 5 to 85% by weight of at least one isobutene homo- or copolymer having a number-average molecular weight Mₙ of from 100 to 500 000, and
(B3) from 5 to 60% by weight of at least one alkoxyvinylsilane,
where the total of the % by weight values for components (B1), (B2), and (B3) is always 100% by weight,
C) from 0 to 50% by weight of a fibrous or particulate filler or a mixture of these,
D) from 0 to 50% by weight of other additives, where the total of the percentages by weight of components A) to D) is 100%.

2. The thermoplastic molding composition according to claim 1, comprising
A) from 20 to 98% by weight
B) from 0.1 to 10% by weight
C) from 1 to 40% by weight
D) from 0 to 40% by weight

3. The thermoplastic molding composition according to claim 1 or 2, where component B) is obtainable from at least one olefin which bears, at its olefinic double bond, at least one electron-withdrawing substituent selected from the group of -CO-, -CN, - NO₂, and -SO₂, as component (B1).

4. The thermoplastic molding composition according to claims 1 to 3, where component B) is obtainable from at least one anhydride of a monoethylenically unsaturated C₄- to C₆-dicarboxylic acid, as component (B1).

5. The thermoplastic molding composition according to claims 1 to 4, where B) is obtainable from at least one compound of the general formula I
R¹R²C=CR³-Si(R⁴)ₘ(OR⁵)₃₋ₘ (I)
in which m is the number 0, 1, or 2, R¹, R², R³, R⁴, and R⁵ can be identical or different and are C₁- to C₂₀-alkyl, C₅- to C₂₀-cycloalkyl, C₆- to C₂₀-aryl, or C₇- to C₂₀-aralkyl radicals, where R¹, R², R³, and R⁴ can also be hydrogen, as component (B3).

6. The thermoplastic molding composition according to claims 1 to 5, where B) is obtainable from at least one trialkoxyvinylsilane of the general formula Ia
H₂C=CH-Si(OR⁵)₃ (Ia)
in which all three alkoxy radicals are identical and R⁵ is as defined above, as component (B3).

7. The thermoplastic molding composition according to claims 1 to 6, where B) is obtainable via copolymerization of
(B1) from 5 to 60% by weight of at least one anhydride of a monoethylenically unsaturated C₄-to C₆-dicarboxylic acid,
(B2) from 5 to 80% by weight of an isobutene homo-or copolymer with a number-average molecular weight Mₙ of from 100 to 500 000, and
(B3) from 5 to 60% by weight of at least one alkoxyvinylsilane,
where the total of the % by weight values for components (B1), (B2), and (B3) is 100% by weight.

8. The use of the thermoplastic molding compositions according to claims 1 to 7 for producing fibers, foils, and moldings of any type.

9. A fiber, a foil, or a molding of any type obtainable from the thermoplastic molding compositions according to claims 1 to 7.

## Revendications

1. Matières à mouler thermoplastiques, contenant
A) 10 à 99,9 % en poids d'un polyamide thermoplastique,
B) 0,1 à 20 % en poids d'un terpolymérisat, pouvant être obtenu par copolymérisation de
(B1) 5 à 60 % en poids d'au moins une oléfine déficiente en électrons,
(B2) 5 à 85 % en poids d'au moins un homo- ou copolymérisat d'isobutène ayant une masse moléculaire moyenne en nombre Mₙ de 100 à 500 000 et
(B3) 5 à 60 % en poids d'au moins un alcoxyvinylsilane,
la somme des % en poids des composants (B1), (B2) et (B3) étant chaque fois égale à 100 % en poids,
C) 0 à 50 % en poids d'une charge fibreuse ou particulaire ou de mélanges de telles charges,
D) 0 à 50 % en poids d'autres additifs ;
la somme des % en poids des composants (A) à (D) étant égale à 100 %.

2. Matières à mouler thermoplastiques selon la revendication 1, contenant
A) 20 à 98 % en poids
B) 0,1 à 10 % en poids
C) 1 à 40 % en poids
D) 0 à 40 % en poids.

3. Matières à mouler thermoplastiques selon la revendication 1 ou 2, dans lesquelles le composant B) peut être obtenu à partir d'au moins une oléfine qui porte sur sa double liaison oléfinique au moins un substituant attirant les électrons, choisi dans le groupe constitué par -CO-, -CN, -NO₂ et -SO₂, en tant que composant (B1).

4. Matières à mouler thermoplastiques selon les revendications 1 à 3, dans lesquelles le composant B) peut être obtenu à partir d'au moins un anhydride d'un acide dicarboxylique en C₄-C₆ à insaturation monoéthylénique en tant que composant (B1).

5. Matières à mouler thermoplastiques selon les revendications 1 à 4, dans lesquelles B) peut être obtenu pouvant être obtenues à partir d'au moins un composé de formule générale I
R¹R²C=CR³-Si(R⁴)ₘ(OR⁵)₃₋ₘ (I)
dans laquelle m représente le nombre 0, 1 ou 2, R¹, R², R³, R⁴ et R⁵ peuvent être identiques ou différents et représentent des radicaux alkyle en C₁-C₂₀, cycloalkyle en C₅-C₂₀, aryle en C₆-C₂₀ ou aralkyle en C₇-C₂₀, R¹, R², R³ et R⁴ peuvent également représenter un atome d'hydrogène, en tant que composant (B3).

6. Matières à mouler thermoplastiques selon les revendications 1 à 5, dans lesquelles B) peut être obtenu à partir d'au moins un trialcoxyvinylsilane de formule générale Ia
H₂C=CH-Si(OR⁸)₃ (Ia)
dans laquelle tous les trois radicaux alcoxy sont identiques et R⁵ a la signification indiquée plus haut, en tant que composant (B3).

7. Matières à mouler thermoplastiques selon les revendications 1 à 6, dans lesquelles B) peut être obtenu par copolymérisation de
(B1) 5 à 60 % en poids d'au moins un anhydride d'un acide dicarboxylique en C₄-C₆ à insaturation monoéthylénique,
(B2) 5 à 80 % en poids d'un homo- ou copolymérisat d'isobutène ayant une masse moléculaire moyenne en nombre M de 100 à 500 000 et n
(B3) 5 à 60 % en poids d'au moins un alcoxyvinylsilane, la somme des % en poids des composants (B1), (B2) et (B3) étant égale à 100 % en poids.

8. Utilisation des matières à mouler thermoplastiques selon les revendications 1 à 7, pour la production de fibres, films et corps moulés de tout type.

9. Fibres, films et corps moulés de tout type pouvant être obtenus à partir des matières à mouler thermoplastiques selon les revendications 1 à 7.
